# EUROPÄISCHE PATENTANMELDUNG

(11) **EP 3 495 677 A1**
(43) Veröffentlichungstag der Anmeldung: **12.06.2019**
(21) Anmeldenummer: 17205350.6
(22) Anmeldetag: 05.12.2017
(51) Int. Cl.: F16C 32/06, F16C 33/10

(54) **GASLAGERKARTUSCHE UND VERWENDUNG EINER GASLAGERKARTUSCHE**

(71) Anmelder: Fischer Engineering Solutions AG, 3360 Herzogenbuchsee (CH)
(72) Erfinder: Die Erfindernennung liegt noch nicht vor
(74) Vertreter: Hepp Wenger Ryffel AG

(57) **Zusammenfassung**

Die Erfindung betrifft eine Gaslagerkartusche (10), enthaltend ein Lagergehäuse (11) sowie eine Welle (12) mit einem ersten Wellenende (13) und einem zweiten Wellenende (14), wobei die Welle (12) mittels mindestens einer Axial-Gaslagereinheit (20) und/oder mindestens einer Radial-Gaslagereinheit (21, 21') und/oder mindestens einer kombinierten Axial-Radial-Gaslagereinheit (22, 22') innerhalb des Lagergehäuses (10) drehbar gelagert ist, das erste Wellenende (13) und/oder das zweite Wellenende (14) Wellenverbindungsmittel (30, 31) zum Verbinden der Welle (12) mit mindestens einem rotierbaren Antriebsglied (40; 40') und/oder mindestens einem rotierbaren Abtriebsglied (41; 40') aufweist und das Lagergehäuse (11) Gehäuseverbindungsmittel (50; 50') zum Verbinden mit einem Systemgehäuse (52) eines Rotationssystems (51) aufweist. Ein weiterer Aspekt der Erfindung betrifft die Verwendung einer solchen Gaslagerkartusche (10) zum Lagern einer Rotationsverbindung zwischen einem ersten Antriebs- oder Abtriebsglieds (40; 40') und einem zweiten Antriebs- oder Abtriebsglieds (41; 41') eines Rotationssystems.

## Beschreibung

Die vorliegende Erfindung betrifft eine Gaslagerkartusche und eine Verwendung einer solchen Gaslagerkartusche.

Gaslager an sich sind aus dem Stand der Technik hinlänglich bekannt. Sie werden in Rotationssystemen eingesetzt, beispielsweise in Werkzeugspindeln oder Strömungsmaschinen (wie beispielsweise Verdichtern oder Turbinen), und dienen der Lagerung einer Welle innerhalb eines Gehäuses. Die Welle oder ein daran befestigtes Bauteil enthält mindestens eine Lagerfläche, und eine Lagerbaugruppe enthält mindestens eine Gegenlagerfläche. Zwischen der mindestens einen Lagerfläche und der mindestens einen Gegenlagerfläche ist ein Spalt gebildet, in dem Luft oder ein anderes Gas für die Gaslagerung sorgt. Typische Bauformen sind Axial-Gaslager und Radial-Gaslager. Bei Axial-Gaslagern ist oftmals eine Lagerscheibe an der Welle befestigt, die zwei Lagerflächen enthält und zwischen zwei Axiallagerscheiben der Lagerbaugruppe gelagert ist. Ein Axialspalt ist zwischen der Lagerscheibe und Gegenlagerflächen der Axiallagerscheiben gebildet. Radial-Gaslager enthalten vielfach eine Lagerbaugruppe mit einer Gegenlagerfläche, wobei zwischen einer Lagerfläche der Welle und der Gegenlagerfläche ein Axialspalt gebildet ist. An sich bekannte Typen von Gaslagern sind aerostatische Gaslager und aerodynamische Gaslager, wie zum Beispiel Herring Bone Grooves, Spiralrillenlager, Folienlager und Kippsegment-Gaslager (englisch: "tilting pad gas bearing").

Alle bekannten Gaslager sind bereits fest in Rotationssystemen verbaut und zu diesem Zweck speziell auf die jeweiligen Anforderungen des Rotationssystems abgestimmt. Um individuelle Rotationssysteme mit einer Gaslagerung zu versehen, kann also nicht auf diese bereits fest verbauten Gaslager zurückgegriffen werden. Stattdessen müssen solche Gaslager individuell konstruiert werden.

Es ist eine Aufgabe der vorliegenden Erfindung, die genannten Nachteile des Standes der Technik zu überwinden. Insbesondere soll also eine Möglichkeit bereitgestellt werden, ein Rotationssystem auf möglichst einfache und schnelle Weise mit einem Gaslager zu versehen, ohne dass dabei auf die speziellen Anforderungen des Rotationssystems geachtet werden muss oder auch nur die genaue Funktionsweise des Gaslagers bekannt sein muss.

Diese und weitere Aufgaben werden in einem ersten Aspekt der Erfindung gelöst durch eine Gaslagerkartusche, die ein Lagergehäuse sowie eine Welle mit einem ersten Wellenende und einem zweiten Wellenende enthält. Die Welle ist mittels mindestens einer Gaslagereinheit innerhalb des Lagergehäuses drehbar gelagert. Insbesondere kann sie mittels mindestens einer Axial-Gaslagereinheit und/oder mindestens einer Radial-Gaslagereinheit und/oder mindestens einer kombinierten Axial-Radial-Gaslagereinheit innerhalb des Lagergehäuses drehbar gelagert sein. Natürlich liegt es im Rahmen der Erfindung, dass die Gaslagerkartusche mehrere Gaslagereinheiten enthält. Dabei kann sie auch mehrere Axial-Gaslagereinheit und/oder mehrere Radial-Gaslagereinheiten und/oder mehrere kombinierte Axial-Radial-Gaslagereinheit enthalten.

Die Gaslagereinheit enthält mindestens eine Lagerfläche und mindestens eine Gegenlagerfläche, wobei zwischen der Lagerfläche und der Gegenlagerfläche ein Spalt gebildet, in dem Luft oder ein anderes Gas für die Gaslagerung sorgt. Eine Axial-Gaslagereinheit kann eine an der Welle befestigte Lagerscheibe enthalten, die zwischen zwei Axiallagerscheiben gelagert ist. Der genannte Spalt ist dann zwischen Lagerflächen der Lagerscheibe und Gegenlagerflächen der Axiallagerscheiben gebildet. Eine Radial-Gaslagereinheit kann eine Lagerbaugruppe mit mindestens einer Gegenlagerfläche enthalten, wobei zwischen einer Lagerfläche der Welle und der Gegenlagerfläche ein Axialspalt gebildet ist. Eine kombinierte Axial-Radial-Gaslagereinheit enthält sowohl Komponenten für eine axiale Gaslagerung als auch Komponenten für eine radiale Gaslagerung. In einer möglichen Variante können eine oder mehrere erste Paare von Lagerflächen und Gegenlagerflächen eine axiale Lagerung bewirken und eine oder mehrere zweite Paare von Lagerflächen und Gegenlagerflächen eine radiale Lagerung. In einer anderen Variante können auch eine oder mehrere Lagerflächen und Gegenlagerflächen vorhanden sein, die sowohl eine axiale als auch eine radiale Lagerung bewirken; diese Lagerflächen und Gegenlagerflächen können beispielsweise kegelmantelförmig oder kugelkalottenförmig ausgebildet sein.

Mindestens eine Axial-Gaslagereinheit und/oder mindestens eine Radial-Gaslagereinheit und/oder mindestens eine kombinierte Axial-Radial-Gaslagereinheit können unabhängig voneinander als aerostatische oder aerodynamisches Gaslager, wie zum Beispiel Herring Bone Grooves, Spiralrillenlager, Folienlager oder Kippsegment-Gaslager (englisch: "tilting pad gas bearing") ausgebildet sein.

Das erste Wellenende und/oder das zweite Wellenende weist Wellenverbindungsmittel zum Verbinden der Welle mit mindestens einem rotierbaren Antriebsglied und/oder mindestens einem rotierbaren Abtriebsglied auf. Das Lagergehäuse weist Gehäuseverbindungsmittel zum Verbinden mit einem Systemgehäuse eines Rotationssystems aufweist.

Die erfindungsgemässe Gaslagerkartusche erlaubt es, ein Rotationssystem (wie beispielsweise eine Werkzeugspindel, eine Strömungsmaschine (z.B. einen Verdichter oder eine Turbine)) auf besonders einfache und schnelle Weise mit einem Gaslager zu versehen. Zu diesem Zweck müssen nämlich lediglich mittels der Wellenverbindungsmittel das erste und/oder das zweite Wellenende mit einem rotierbaren Antriebsglied oder Abtriebsglied des Rotationssystems verbunden werden, und das Lagergehäuse muss mittels der Gehäuseverbindungsmittel mit dem Systemgehäuse des Rotationssystems verbunden werden. In einigen Fällen kann dann noch eine Auswuchtung erforderlich sein. Alle weiteren Funktionen der Gaslagerung müssen vom Benutzer jedoch nicht gesondert beachtet werden: Die hohe geforderte Präzision der Gaslagerung ist durch die Gaslagerkartusche gegeben. Es ist keine Abstimmung von einzelnen Lagerbauteilen zueinander erforderlich, und es besteht eine Unabhängigkeit vom Systemgehäuse. Zudem werden thermomechanische Einflüsse der Umgebung auf die Gaslagerung weitgehend reduziert. Ferner ergeben sich auch eine einfache Montage und eine hohe Servicefreundlichkeit. In vielen Ausführungsbeispielen muss der Kühlung und Belüftung der Gaslagerung keine spezielle Beachtung geschenkt werden, da diese Funktionen direkt in der Gaslagerkartusche integriert sein können. Eine Qualitätssicherung und eine Funktionsprüfung können auf einfache Weise durch Endabnahme der Baugruppe sichergestellt werden.

Die Gehäuseverbindungsmittel können eine Gewindeverbindung, eine Klemmverbindung, eine Rändelverbindung, eine Polygonverbindung, eine Schweissverbindung, eine Lötverbindung, eine Kristallisationsverbindung, eine Schrumpfverbindung, eine Pressverbindung, eine Klebeverbindung, eine durch hydraulisches Aufpressen erreichte Verbindung, eine Kunststoffgussverbindung oder eine Lasersinterverbindung enthalten. Beispielsweise kann das Lagergehäuse in axialer oder radialer Richtung im Systemgehäuse des Rotationssystems eingeklemmt oder darin eingespannt sein.

Das erste Wellenende kann mit einem rotierbaren Antriebsglied verbindbar sein und das zweite Wellenende mit einem rotierbaren Abtriebsglied oder umgekehrt. Die Erfindung erfasst auch Ausführungsformen, in der beide Wellenenden mit einem Antriebsglied verbindbar sind, sowie Ausführungsformen, in der beide Wellenenden mit einem Abtriebsglied verbindbar sind. Dies kann beispielsweise sinnvoll sein für Energiespeicher, für Energierückspeisungen oder für Kombinationen aus Turbine und Generator. Ausserdem liegt es im Rahmen der Erfindung, dass beispielsweise das erste Wellenende über mehrere Wellenverbindungsmittel zum Verbinden mit mehreren Antriebsgliedern und/oder Abtriebsgliedern verfügt, also etwa mit zwei Antriebsgliedern oder mit zwei Abtriebsgliedern oder mit einem Antriebsglied und einem Abtriebsglied. Eine Gaslagerkartusche mit Wellenverbindungsmitteln zum Verbinden mit zwei Abtriebsgliedern an ein und demselben kann beispielsweise in einem zweistufigen Verdichter verwendet werden, indem das Wellenende mittels der Wellenverbindungsmittel mit zwei Verdichterrädern verbunden wird. Ferner umfasst die Erfindung auch Gaslagerkartuschen, bei denen nur eines der beiden Wellenenden Wellenverbindungsmittel enthält.

Das Wellenende kann beispielsweise zylindrisch oder kegelmantelförmig ausgebildet sein. Dabei wird ein Wellenende hier und im Folgenden als zylindrisch oder kegelmantelförmig bezeichnet, wenn seine Aussenumfangsfläche zylindrisch bzw. kegelmantelförmig ist. Auch erfasst von dieser Bezeichnung sind also insbesondere Wellenenden mit einer zylindrischen bzw. kegelmantelförmigen Aussenumfangsfläche, die aber beispielsweise an ihrer Stirnseite ein Gewinde aufweisen. In vorteilhaften Ausführungsformen weist das Wellenende einen kleineren Durchmesser auf als der gelagerte Teil der Welle, insbesondere als eine der radialen Lagerung dienende Lagerfläche der Welle. Dies vereinfacht die Montage und Fertigung, da das Wellenende durch den Innendurchmesser des Radiallagers eingeführt werden kann, ohne dass eine Montage/Demontage des Axiallagers nötig ist. Zudem ist eine Welle mit einem Wellenende mit kleinerem Durchmesser einfacher auszuwuchten.

Die Wellenverbindungsmittel können beispielsweise eine Gewindeverbindung, eine Klemmverbindung, eine Rändelverbindung, eine Polygonverbindung, eine Schweissverbindung, eine Lötverbindung, eine Kristallisationsverbindung, eine Schrumpfverbindung, eine Pressverbindung, eine Klebeverbindung, eine durch hydraulisches Aufpressen erreichte Verbindung, eine Kunststoffgussverbindung oder eine Lasersinterverbindung enthalten.

Im Falle einer Gewindeverbindung können die Wellenverbindungsmittel ein Innengewinde oder ein Aussengewinde aufweisen.

Alternativ kann die Verbindung zwischen Welle und Antriebsglied bzw. Abtriebsglied auch durch eine Spannverbindung erreicht werden. Hierfür kann eine beispielsweise zylindermantelförmigen Spannhülse verwendet werden, die zwischen Wellenende und Antriebsglied bzw. Abtriebsglied eingespannt wird. Die Wellenverbindungsmittel können beispielsweise durch eine wie in der bisher unveröffentlichten internationalen Patentanmeldung PCT/EP2017/074607 offenbarte Spannhülse gebildet sein. Eine solche Spannhülse dient dem Übertragen von Drehmomenten zwischen der Welle und dem Antriebsglied bzw. Abtriebsglied, die dem Rotor gemäss PCT/EP2017/074607 entsprechen. Die Spannhülse gemäss PCT/EP2017/074607 lässt bei Rotation in zumindest einem Drehzahlbereich in wenigstens einer, bevorzugt in jeder zu einer Rotationsachse der Welle und des Rotors senkrechten Schnittebene einen radialen Spalt zwischen Welle und Rotor frei. Die Offenbarung der PCT/EP2017/074607 hinsichtlich der dort beschriebenen Spannhülse durch Bezugnahme in die vorliegende Offenbarung aufgenommen.

Eines oder mehrere der Wellenverbindungsmittel können auch als Magnetkupplungselement ausgebildet sein. Durch Zusammenwirken mit einem korrespondierenden Magnetkupplungselement eines Antriebs- oder Abtriebsgliedes kann auf diese Weise eine Magnetkupplung erreicht werden.

Die Magnetkupplung kann als axiale oder als radiale Magnetkupplung ausgebildet sein. Eine Magnetkupplung kann eine kontaktfreie Drehmomentübertragung erzeugen und für eine hermetische Abdichtung sorgen. Zu diesem Zweck kann ein Spaltrohr vorgesehen sein, welches jeweils eines der Magnetkupplungselemente oder beide Magnetkupplungselemente einschliesst.

In einigen Ausführungsformen ist ein rotierbares Antriebsglied oder ein rotierbares Abtriebsglied mit dem ersten Wellenende oder dem zweiten Wellenende lösbar oder unlösbar oder sogar einstückig verbunden. Auf diese Weise ist schon eine Vormontage mit dem Antriebsglied bzw. mit dem Abtriebsglied möglich. Bei diesen Ausführungsformen enthält das jeweils andere Wellenende Wellenverbindungsmittel, ist aber nicht bereits mit einem rotierbaren Antriebsglied oder Abtriebsglied verbunden.

Es ist auch denkbar, wird aber derzeit nicht beansprucht, dass sowohl mit dem ersten Wellenende als auch mit dem zweiten Wellenende ein jeweiliges rotierbares Antriebsglied oder Abtriebsglied lösbar oder unlösbar oder sogar einstückig verbunden ist.

Enthält die Gaslagerkartusche mindestens eine Axial-Gaslagereinheit, so kann diese mindestens eine an der Welle gebildete Lagerfläche sowie mindestens eine am Lagergehäuse gebildete Gegenlagerfläche enthalten, wobei zwischen der Lagerfläche und der Gegenlagerfläche ein Axialspalt zur axialen Gaslagerung der Welle gebildet ist. Bevorzugt sollte der Axialspalt eine möglichst kleine, definierte, präzise Form aufweisen. Der Axialspalt kann basierend auf den geometrischen Gegebenheiten auf die spezifischen Randbedingungen (Umgebungseinflüsse wie z.B. Druck, Temperatur, Gaseigenschaften sowie die Betriebsbedingungen wie z.B. Drehzahl, Materialien, oder Kräfte) ausgelegt und optimiert werden. Sowohl die Lagerfläche als auch die Gegenlagerfläche können im Wesentlichen eben oder im Wesentlichen kegelmantelförmig ausgebildet sein oder auch eine Freiform aufweisen.

Die Lagerfläche, insbesondere die im Wesentlichen ebene Lagerfläche, kann eine Oberflächenstruktur aufweisen, die beispielsweise eine Spirale enthalten kann. Eine solche Oberflächenstruktur kann etwa der Führung eines Gasstromes dienen. Die Lagerfläche und/oder die Gegenlagerfläche können unabhängig voneinander beispielsweise ringförmig oder kreisförmig ausgebildet sein.

Enthält die Gaslagerkartusche mindestens eine Axial-Gaslagereinheit, so kann die Welle eine Lagerscheibe mit einer dem ersten Wellenende zugewandten ersten, beispielsweise im Wesentlichen ebenen Lagerfläche der Axial-Gaslagereinheit und einer dem zweiten Wellenende zugewandten zweiten, beispielsweise im Wesentlichen ebenen Lagerfläche der Axial-Gaslagereinheit aufweisen. Auch in dieser Variante können die Lagerfläche und/oder die Gegenlagerfläche unabhängig voneinander beispielsweise ringförmig oder kreisförmig ausgebildet sein.

Enthält die Gaslagerkartusche mindestens eine Radial-Gaslagereinheit, so kann diese Radial-Gaslagereinheit mindestens eine an der Welle gebildete Lagerfläche sowie mindestens eine am Lagergehäuse gebildete Gegenlagerfläche enthalten, wobei zwischen der Lagerfläche und der Gegenlagerfläche ein Radialspalt zur radialen Gaslagerung der Welle gebildet ist. Auch der Radialspalt sollte bevorzugt eine möglichst kleine, definierte, präzise Form aufweisen. Der Radialspalt kann basierend auf den geometrischen Gegebenheiten auf die spezifischen Randbedingungen (Umgebungseinflüsse wie z.B. Druck, Temperatur, Gaseigenschaften sowie die Betriebsbedingungen wie z.B. Drehzahl, Materialien, oder Kräfte) ausgelegt und optimiert werden. Sowohl die Lagerfläche als auch die Gegenlagerfläche können im Wesentlichen zylindermantelförmig oder im Wesentlichen kegelmantelförmig ausgebildet sein oder auch eine Freiform aufweisen. Sowohl die Lagerfläche als auch die Gegenlagerfläche können im Wesentlichen eben oder im Wesentlichen kegelmantelförmig ausgebildet sein oder auch eine Freiform aufweisen.

Analog zu oben können die Lagerfläche, insbesondere die im Wesentlichen zylindermantelförmige Lagerfläche der Radial-Gaslagereinheit, und/oder die Gegenlagerfläche der Radial-Gaslagereinheit, insbesondere die im Wesentlichen zylindermantelförmige Gegenlagerfläche, eine Oberflächenstruktur aufweisen, die beispielsweise eine Herring Bone Groove enthalten kann, die etwa der Führung eines Gasstromes dienen kann. Zwischen der Lagerfläche und der Gegenlagerfläche ist ein Radialspalt zur radialen Gaslagerung der Welle gebildet. Bevorzugt sollte auch der Radialspalt eine möglichst kleine, definierte, präzise Form aufweisen. Der Radialspalt kann basierend auf den geometrischen Gegebenheiten auf die spezifischen Randbedingungen (Umgebungseinflüsse wie z.B. Druck, Temperatur, Gaseigenschaften sowie die Betriebsbedingungen wie z.B. Drehzahl, Materialien, oder Kräfte) ausgelegt und optimiert werden. Sowohl die Lagerfläche als auch die Gegenlagerfläche können im Wesentlichen zylindermantelförmig ausgebildet sein oder auch eine Freiform aufweisen.

Natürlich umfasst die Erfindung nicht nur Gaslagerkartuschen mit den oben genannten Axial-Gaslagereinheiten und/oder Radial-Gaslagereinheiten, sondern auch Gaslagerkartuschen, die auch oder nur mindestens eine kombinierte Axial-Radial-Gaslagereinheit enthalten. Bei einer solchen kombinierten Axial-Radial-Gaslagereinheit können eine Lagerfläche der Welle und eine Gegenlagerfläche beispielsweise kegelmantelförmig oder kugelkalottenförmig ausgebildet sein.

Eine kombinierte Axial-Radial-Gaslagereinheit kann auch mindestens ein Paar von Lagerflächen und Gegenlagerflächen enthalten, das nur für eine axiale Gaslagerung sorgt. Dieses Paar kann eine an der Welle gebildete Lagerfläche sowie eine am Lagergehäuse gebildete Gegenlagerfläche enthalten, wobei zwischen der Lagerfläche und der Gegenlagerfläche ein Axialspalt zur axialen Gaslagerung der Welle gebildet ist. Alternativ oder zusätzlich kann eine kombinierte Axial-Radial-Gaslagereinheit auch mindestens ein Paar von Lagerflächen und Gegenlagerflächen enthalten, das nur für eine radiale Gaslagerung sorgt. Dieses Paar kann eine an der Welle gebildete Lagerfläche sowie eine am Lagergehäuse gebildete Gegenlagerfläche enthalten, wobei zwischen der Lagerfläche und der Gegenlagerfläche ein Radialspalt zur radialen Gaslagerung der Welle gebildet ist.

In einigen bevorzugten Ausführungsformen enthält die Gaslagerkartusche eine dem ersten Wellenende zugewandte erste Radial-Gaslagereinheit, eine dem zweiten Wellenende zugewandte zweite Radial-Gaslagereinheit sowie eine zwischen der ersten Radial-Gaslagereinheit und der zweiten Radial-Gaslagereinheit angeordnete Axial-Gaslagereinheit. Hierdurch ergeben sich eine besonders hohe Stabilität gegen Verkippungen und eine besonders geringe Baulänge der Gaslagerkartusche.

In anderen bevorzugten Ausführungsformen enthält die Gaslagerkartusche eine dem ersten Wellenende zugewandte erste Radial-Gaslagereinheit, eine dem zweiten Wellenende zugewandte zweite Radial-Gaslagereinheit sowie eine zwischen der ersten Radial-Gaslagereinheit und dem ersten Wellenende oder zwischen der zweiten Radial-Gaslagereinheit und dem zweiten Wellenende angeordnete Axial-Gaslagereinheit. Hierdurch werden eine besonders einfache Montage und teilweise auch Fertigung ermöglicht, da die Welle von einer Seite eingeschoben werden kann; eine präzise Ausrichtung der Radiallagerlagerstellen ist bei der Montage nicht nötig.

In weiteren bevorzugten Ausführungsformen weist die Gaslagerkartusche mindestens eine kombinierte Axial-Radial-Gaslagereinheit auf, die mindestens eine an der Welle gebildete nicht-zylindrische und nicht-ebene rotationssymmetrische Lagerfläche sowie mindestens eine am Lagergehäuse gebildete nicht-zylindrische und nicht-ebene rotationssymmetrische Gegenlagerfläche enthält, wobei zwischen der Lagerfläche und der Gegenlagerfläche ein rotationssymmetrischer Spalt zur kombinierten axialen und radialen Gaslagerung der Welle gebildet ist. Beispielsweise können kegelmantelförmige Lagerflächen und Gegenlagerflächen einen kegelmantelförmigen Spalt begrenzen, oder kugelkalottenförmige Lagerflächen und Gegenlagerflächen einen kugelkalottenförmigen Spalt begrenzen.

In noch weiteren bevorzugten Ausführungsformen enthält die Gaslagerkartusche eine dem ersten Wellenende zugewandte erste kombinierte Axial-Radial-Gaslagereinheit mit einer an der Welle gebildeten, sich in Richtung auf das erste Wellenende verjüngenden ersten rotationssymmetrischen Lagerfläche sowie eine dem zweiten Wellenende zugewandte zweite kombinierte Axial-Radial-Gaslagereinheit mit einer an der Welle gebildeten, sich in Richtung auf das zweite Wellenende verjüngenden zweiten rotationssymmetrischen Lagerfläche. Die nicht-zylindrische und nicht-ebene rotationssymmetrische Lagerfläche und die nicht-zylindrische und nicht-ebene rotationssymmetrische Gegenlagerfläche können kegelmantelförmig oder kugelkalottenförmig ausgebildet sein. Diese Anordnung hat den Vorteil, dass keine separate Axiallagerung notwendig ist. Vielmehr kann die Axial-Radial-Gaslagereinheit in einer einzigen Lagerstelle realisiert werden, was z.B. spezifische Lagereigenschaften und eine kompakte Bauweise in radialer Richtung ermöglicht. Teller sind nicht erforderlich, und es können hohe Steifigkeiten erzielt werden. Zudem können in einzelnen Ausführungsformen hohe Axialsteifigkeiten bei geringem radialem Bauraum erreicht werden, da das Gas nicht nach innen ins Wellenzentrum entweichen kann.

Als Lagergas, welches sich beim Betrieb der Gaslagerung in den Spalten der Gaslagerungen befindet, kann beispielsweise Luft, ein Kältemittel, Sauerstoff, Wasserstoff, ein Edelgas (wie etwa Helium oder Argon), Stickstoff oder Mischungen davon, insbesondere mit Benzindämpfen und/oder Dieselabgasen, dienen.

Die Gaslagerkartusche kann Übertragungsmittel zum Senden und/oder Empfangen von Signalen aufweisen, insbesondere Sendemittel zum Senden und/oder Empfangsmittel zum Empfangen von Signalen an bzw. von ein/einem Antriebsglied und/oder ein/einem Abtriebsglied und/oder ein/einem Systemgehäuse eines Rotationssystems. Bei den Signalen kann es sich beispielsweise um optische, akustische, elektrische oder magnetische Signale handeln. Von der Gaslagerkartusche gesendete Signale können beispielsweise eine Temperatur im Inneren der Gaslagerkartusche charakterisieren.

Alternativ oder zusätzlich kann die Gaslagerkartusche Fluidanschlüsse enthalten, durch die Fluide in die Gaslagerkartusche eingeleitet und/oder aus dieser ausgeleitet werden können. Ein Fluid kann in mindestens ein statisches und/oder in mindestens ein rotierbares Teil der Gaslagerkartusche eingeleitet und/oder daraus ausgeleitet werden. Beispielsweise kann ein Kühlfluid eingeleitet werden, mit dem die Welle der Gaslagerkartusche gekühlt werden kann.

Zur Kühlung kann die Gaslageranordnung mindestens einen Kühlkanal enthalten. Ein solcher Kühlkanal kann an der Aussenseite oder im Inneren des Lagergehäuses gebildet sein. Er kann beispielsweise in Umfangsrichtung oder in radialer oder axialer Richtung verlaufen oder wendelförmig ausgebildet sein. Alternativ oder zusätzlich kann ein Kühlkanal enthalten sein, der im Inneren der Welle verläuft - beispielsweise ein Kühlkanal, so wie er in der EP 1 736 277 A2 beschrieben ist.

Das Lagergehäuse kann zur Vereinfachung der Montage aus mehreren Lagergehäuseteilen zusammengesetzt sein, die beispielsweise miteinander verschraubt, verklebt, verlötet, als Pressverbindung oder verschweisst sein können. Ein Verschrauben kann mit Hilfe von Schrauben erfolgen, bevorzugt mit Hilfe von in axialer Richtung eingesetzten und in Umfangsrichtung gleichmässig verteilten Schrauben. Beispielsweise können Senkschrauben verwendet werden, die in ein Senkloch eines ersten Lagergehäuseteils eingesetzt und in ein Innengewinde eines zweiten Lagergehäuseteils eingeschraubt werden. Alternativ oder zusätzlich können Dehnschrauben verwendet werden, welche die Lagergehäuseteile durchdringen und mit Muttern zusammenwirken. Auch diese Dehnschrauben können in axialer Richtung eingesetzt und in Umfangsrichtung gleichmässig verteilt sein. Dehnschrauben haben den Vorteil, dass eine Vorspannkraft zwischen den Lagergehäuseteilen präzise eingestellt werden kann. Ebenfalls alternativ oder zusätzlich können die Schrauben Zylinderkopfschrauben sein. Ein Verschrauben kann aber auch durch ein direktes Verschrauben der Lagergehäuseteile erfolgen. Zu diesem Zweck kann ein erstes Lagergehäuseteil ein Aussengewinde enthalten, welches in ein Innengewinde eines zweiten Lagergehäuseteils eingeschraubt wird. Ein Verschweissen erfolgt bevorzugt mittels eines Laserstrahls oder eines Elektronenstrahls, wodurch der Verzug der Lagergehäuseteile gering gehalten werden kann. Ein Verkleben, Verlöten oder Verschweissen ist für eine Serienproduktion besonders geeignet.

Ein weiterer Aspekt der vorliegenden Erfindung betrifft die Verwendung einer wie oben beschriebenen Gaslagerkartusche zum Lagern einer Rotationsverbindung zwischen einem ersten Antriebs- oder Abtriebsglied und einem zweiten Antriebs- oder Abtriebsglied eines Rotationssystems. Dabei ist die Gaslagerkartusche mittels der Gehäuseverbindungsmittel mit einem Systemgehäuse des Rotationssystems verbunden, das erste Wellenende ist mit dem ersten Antriebs- oder Abtriebsglied verbunden, insbesondere mittels der Wellenverbindungsmittel des ersten Wellenendes, und das zweite Wellenende ist mit dem zweiten Antriebs- oder Abtriebsglied verbunden, insbesondere mittels der Wellenverbindungsmittel des zweiten Wellenendes.

Das Rotationssystem kann beispielsweise eine Werkzeugspindel, eine insbesondere elektrisch angetriebene oder gebremste Strömungsmaschine, wie beispielsweise ein Verdichter, insbesondere ein Turboverdichter, eine Rotationsbremse, ein Turbinengenerator, eine Drehmomentmessanordnung, ein optisches System oder eine Turbine sein. Die Gaslagerkartusche kann auch auf einem Prüfstand verwendet werden.

Im Folgenden wird die Erfindung anhand mehrerer Ausführungsbeispiele und Zeichnungen näher erläutert. Dabei zeigen
- Figur 1a:: eine erste erfindungsgemässe Gaslagerkartusche in einer seitlichen Schnittansicht;
- Figur 1b:: eine Detailansicht eines Rotationssystems mit der ersten Gaslagerkartusche gemäss Figur 1a in einer seitlichen Schnittansicht;
- Figur 1c:: die erste erfindungsgemässe Gaslagerkartusche gemäss Figuren 1a und 1b mit einem damit verbundenen Verdichterrad;
- Figur 2:: eine zweite erfindungsgemässe Gaslagerkartusche in einer seitlichen Schnittansicht;
- Figur 3:: eine dritte erfindungsgemässe Gaslagerkartusche in einer seitlichen Schnittansicht;
- Figur 4:: eine vierte erfindungsgemässe Gaslagerkartusche in einer seitlichen Schnittansicht;
- Figur 5a:: eine fünfte erfindungsgemässe Gaslagerkartusche in einer seitlichen Schnittansicht;
- Figur 5b:: eine Variante der fünften erfindungsgemässen Gaslagerkartusche in einer schematischen seitlichen Schnittansicht;
- Figur 6:: eine sechste erfindungsgemässe Gaslagerkartusche in einer schematischen seitlichen Schnittansicht;
- Figur 7:: eine siebte erfindungsgemässe Gaslagerkartusche in einer schematischen seitlichen Schnittansicht;
- Figur 8:: eine achte erfindungsgemässe Gaslagerkartusche in einer schematischen seitlichen Schnittansicht;
- Figur 9:: eine neunte erfindungsgemässe Gaslagerkartusche mit einer Welle, deren beide Enden mit einem jeweiligen Antriebs- oder Abtriebsglied verbunden sind.

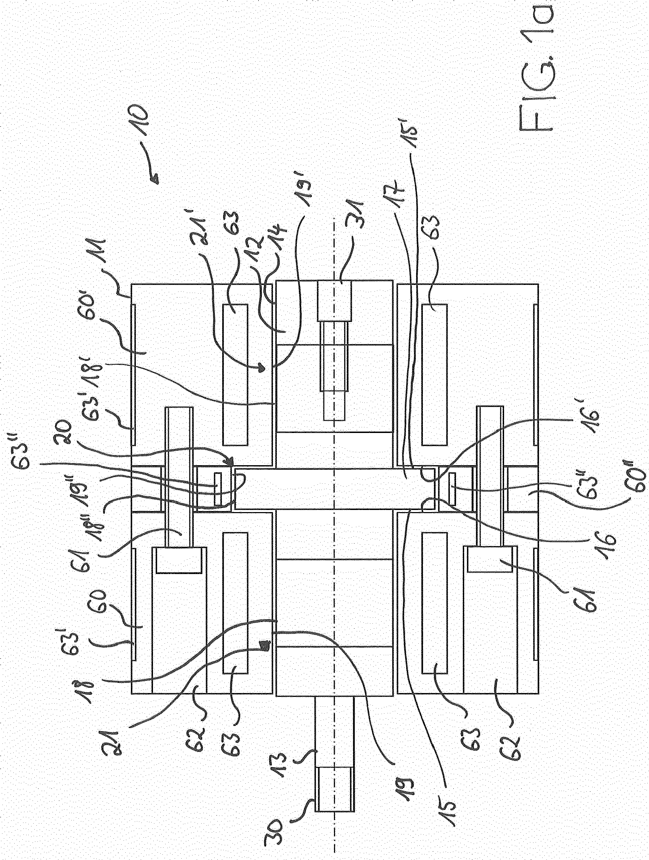

Die in Figur 1a dargestellte Gaslagerkartusche 10 enthält ein Lagergehäuse 11 und eine Welle 12 mit einem ersten zylindrischen Wellenende 13 und einem zweiten zylindrischen Wellenende 14. Die Gaslagerkartusche 10 enthält eine dem ersten Wellenende 13 zugewandte erste Radial-Gaslagereinheit 21, eine dem zweiten Wellenende 14 zugewandte zweite Radial-Gaslagereinheit 21' sowie eine zwischen der ersten Radial-Gaslagereinheit 21 und der zweiten Radial-Gaslagereinheit 21' angeordnete Axial-Gaslagereinheit 20. Mittels dieser drei Gaslagereinheiten ist die Welle 12 innerhalb des Lagergehäuses 10 drehbar gelagert.

Das in Figur 1a dargestellte Lagergehäuse 11 enthält drei Lagergehäuseteile 60, 60', 60", nämlich ein dem ersten Wellenende 13 zugewandtes erstes Lagergehäuseteil 60, ein dem zweiten Wellenende 14 zugewandtes zweites Lagergehäuseteil 60' sowie ein zwischen dem ersten Lagergehäuseteil 60 und dem zweiten Lagergehäuseteil 60' angeordnetes drittes Lagergehäuseteil 60". Die Lagergehäuseteile 60, 60', 60" sind mit Hilfe mehrerer in Umfangsrichtung gleichmässig verteilter Zylinderkopfschrauben 61 verbunden, wodurch das mittlere Lagergehäuseteil 60" zwischen den beiden äusseren Lagergehäuseteilen 60, 60' eingespannt ist. Hierzu enthält das erste Lagergehäuseteil 60 Sacklöcher 62, in die die Zylinderkopfschrauben 61 eingesetzt sind. Die Welle 12 erstreckt sich durch in den Lagergehäuseteilen 60, 60', 60" eingebrachte Bohrungen. Zur Bildung der Axial-Gaslagereinheit 20 ist der Innendurchmesser der Bohrung des mittleren Lagergehäuseteils 60" grösser als der der beiden äusseren Lagergehäuseteilen 60, 60'.

Das Lagergehäuse 11 enthält mehrere Kühlkanäle 63, 63', 63'', welche in Umfangsrichtung verlaufen. Genauer ist in jedem der beiden äusseren Lagergehäuseteile 60, 60' jeweils ein Kühlkanal 63 gebildet, der an einem kleineren Durchmesser angeordnet ist als die Zylinderkopfschrauben 61. Weiterhin ist an jedem der beiden äusseren Lagergehäuseteile 60, 60' jeweils ein Kühlkanal 63' gebildet, der das Lagergehäuse 11 an dessen Aussenseite umläuft. Schliesslich enthält auch das mittlere Lagergehäuseteil 60" einen Kühlkanal 63", der an einem kleineren Durchmesser angeordnet ist als die Zylinderkopfschrauben 61.

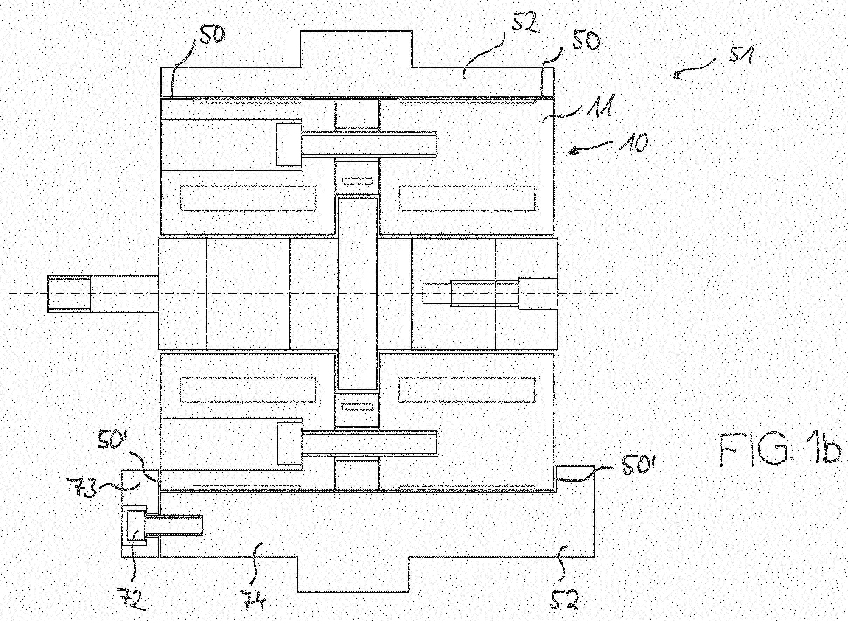

In Figur 1b ist ein Rotationssystem 51 mit der Gaslagerkartusche 10 gemäss Figur 1a dargestellt. Bei dem Rotationssystem 51 kann es sich beispielsweise um eine Werkzeugspindel, eine insbesondere elektrisch angetriebene oder gebremste Strömungsmaschine, wie beispielsweise einen Verdichter, insbesondere einen Turboverdichter, eine Rotationsbremse, einen Turbinengenerator, eine Drehmomentmessanordnung, ein optisches System oder eine Turbine handeln.

Figur 1b zeigt in einer gemeinsamen Darstellung zwei verschiedene und alternative Gehäuseverbindungsmittel 50, 50' des Lagergehäuses 11 zum Verbinden der Gaslagerkartusche 10 mit einem Systemgehäuse 52 eines Rotationssystems 51.

Die in Figur 1b oben dargestellten Gehäuseverbindungsmittel 50 sind durch radiale Aussenflächen des Lagergehäuses 11 gebildet, mit deren Hilfe das Lagergehäuse 11 in radialer Richtung im Systemgehäuse 52 des Rotationssystems 51 eingeklemmt oder darin eingespannt ist. Die in Figur 1b unten dargestellten Gehäuseverbindungsmittel 50' sind durch axiale Aussenflächen des Lagergehäuses 11 gebildet, mit deren Hilfe das Lagergehäuse 11 in axialer Richtung im Systemgehäuse 52 des Rotationssystems 51 eingeklemmt oder darin eingespannt ist. Das Einspannen erfolgt mit Hilfe einer Spannschraube 72, die das Lagergehäuse 11 zwischen einem Spannblock 73 und einem Hauptblock 74 des Systemgehäuses 52 einspannt.

Die Axial-Gaslagereinheit 20 ist gemäss Figur 1a im Bereich des mittleren Lagergehäuseteils 60" angeordnet. Hier weist die Welle 12 eine Lagerscheibe 17 auf. Diese enthält eine dem ersten Wellenende 13 zugewandte erste, in diesem Ausführungsbeispiel ebene und ringförmige Lagerfläche 13 und eine dem zweiten Wellenende 14 zugewandte zweite, in diesem Ausführungsbeispiel ebene und ringförmige Lagerfläche 15'. An der äusseren Lagergehäuseteilen 60, 60' ist jeweils eine in diesem Ausführungsbeispiel ebene ringförmige Gegenlagerflächen 16, 16' gebildet, die einer der Lagerflächen 15, 15' in axialer Richtung gegenüberliegt. Zwischen der Lagerfläche 15 und der Gegenlagerfläche 16 sowie zwischen der Lagerfläche 15' und der Gegenlagerfläche 16' ist jeweils ein Axialspalt zur axialen Gaslagerung der Welle 12 gebildet.

An der Welle 12 sind weiterhin in diesem Ausführungsbeispiel zylindermantelförmige Lagerflächen 18, 18' sowie eine am Aussenumfang der Lagerscheibe 17 gebildete Fläche 18" vorhanden. Die Lagerfläche 18 ist innerhalb des ersten Lagergehäuseteils 60 angeordnet und dem ersten Wellenende 13 zugewandt, und die Lagerfläche 18' ist innerhalb des zweiten Lagergehäuseteils 60' angeordnet und dem zweiten Wellenende 14 zugewandt. Jedes der beiden äusseren Lagergehäuseteile 60, 60' enthält eine in diesem Ausführungsbeispiel zylindermantelförmige Gegenlagerfläche 19 bzw. 19'. Die Gegenlagerfläche 19 ist in der Bohrung des Lagergehäuseteils 60 gebildet und dem ersten Wellenende 13 zugewandt, und die Gegenlagerfläche 19' ist in der Bohrung des Lagergehäuseteils 60' gebildet und dem zweiten Wellenende 14 zugewandt. Zwischen der Lagerfläche 18 und der Gegenlagerfläche 19 sowie zwischen der Lagerfläche 18' und der Gegenlagerfläche 19' ist jeweils ein Radialspalt zur radialen Gaslagerung der Welle 12 gebildet.

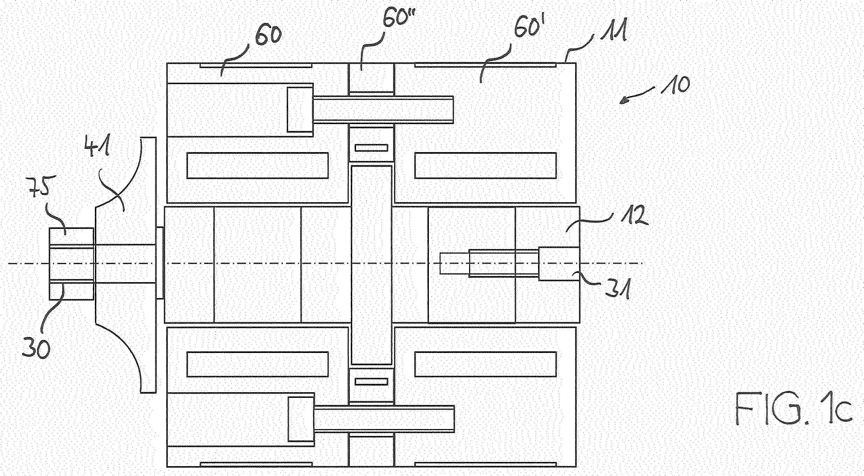

Das erste Wellenende 13 und das zweite Wellenende 14 verfügen über Wellenverbindungsmittel 30 bzw. 31 zum Verbinden der Welle 12 mit einem nur in Figur 1c dargestellten Verdichterrad 41, der ein rotierbares Abtriebsglied bildet. Das am ersten Wellenende 13 angeordnete Wellenverbindungsmittel 30 enthält ein Aussengewinde, auf welches eine optionale Mutter 75 aufgeschraubt ist, um das Verdichterrad 41 festzuspannen. Alternativ dazu kann das Verdichterrad 41 mit Hilfe einer wie in der bisher unveröffentlichten internationalen Patentanmeldung PCT/EP2017/074607 offenbarten Spannhülse am ersten Wellenende 13 befestigt sein. Das am zweiten Wellenende 14 angeordnete Wellenverbindungsmittel 31 weist ein Innengewinde auf. Alternativ ist es denkbar und liegt im Rahmen der Erfindung, dass ein rotierbares Antriebsglied oder ein rotierbares Abtriebsglied mit dem ersten Wellenende 13 oder dem zweiten Wellenende 14 verbunden ist. In einer alternativen Ausführungsform könnte anstelle des Verdichterrades 41 als Abtriebsglied auch ein Turbinenrad als Antriebsglied vorhanden sein.

Die in Figur 1a dargestellte Anordnung der Axial-Gaslagereinheit 20 zwischen der ersten Radial-Gaslagereinheit 21 und der zweiten Radial-Gaslagereinheit 21' ergibt eine besonders hohe Stabilität gegen Verkippungen und eine besonders geringe Baulänge der Gaslagerkartusche 10.

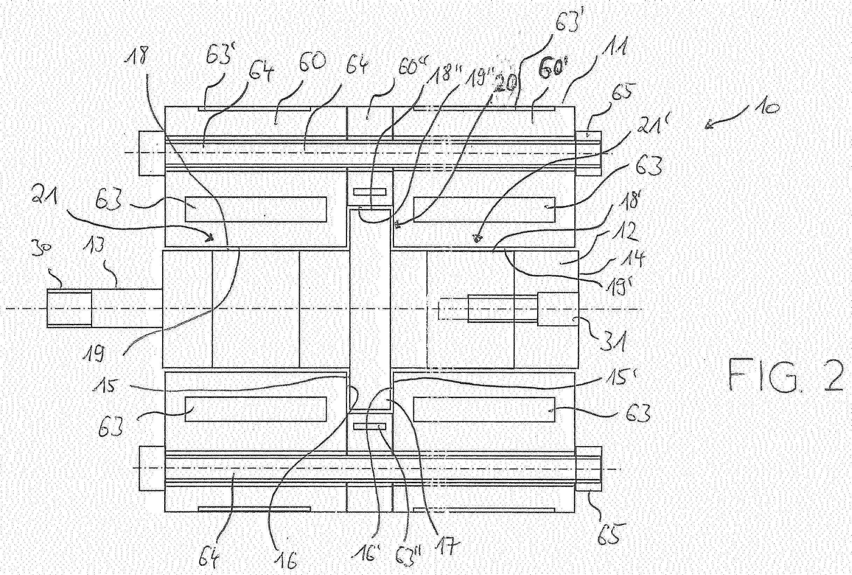

Die in Figur 2 dargestellte Ausführungsform unterscheidet sich von der in Figur 1a gezeigten lediglich im Aufbau des Lagergehäuses 11. Hier sind die Lagergehäuseteile 60, 60', 60" mit Hilfe von in Umfangsrichtung verteilten Schrauben 64 und zugehörigen Muttern 65 verschraubt, welche die Lagergehäuseteile 60, 60', 60" vollständig durchdringen. Im Bereich der Schrauben 64 enthalten die Lagergehäuseteile 60, 60', 60" keine Gewinde zum Halten der Schrauben 64. Hier wird ebenfalls das mittlere Lagergehäuseteil 60" zwischen den beiden äusseren Lagergehäuseteilen 60, 60' in axialer Richtung eingespannt.

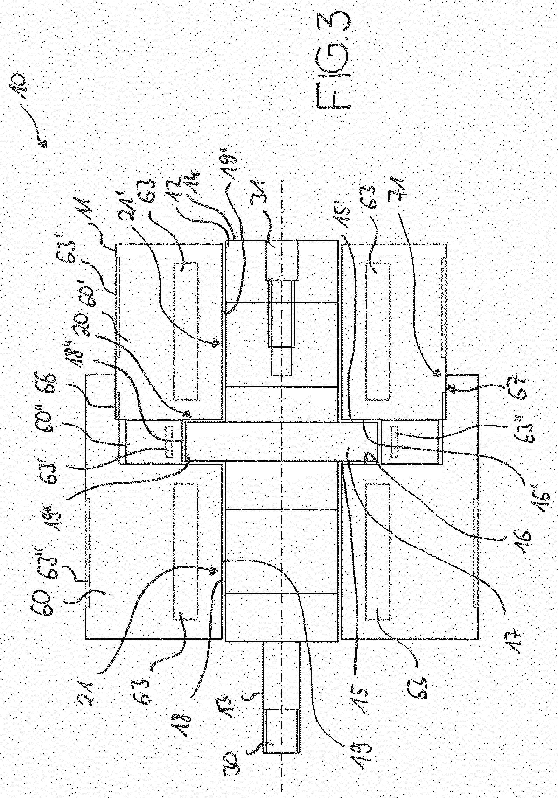

Auch die dritte erfindungsgemässe Gaslagerkartusche 10 gemäss Figur 3 unterscheidet sich lediglich im Aufbau des Lagergehäuses 11 von den ersten beiden Ausführungsformen. Das zweite Lagergehäuseteil 60' ist hier direkt mit dem ersten Lagergehäuseteil 60 verschraubt. Zu diesem Zweck hat das erste Lagergehäuseteil 60 einen grösseren Durchmesser als das zweite Lagergehäuseteil 60'. Es enthält eine Aufnahmeöffnung 71 sowohl für das mittlere Lagergehäuseteil 60" als auch für einen Teil des Lagergehäuseteils 60'. In der Aufnahmeöffnung 71 ist ein Innengewinde vorgesehen, welches mit einem Aussengewinde des zweiten Lagergehäuseteils 60' eine Gewindeverbindung 66 bildet. Bevorzugt ist ein optionaler Führungsdurchmesser 67 vorhanden, der einer sehr präzisen Positionierung der Lagergehäuseteile 60, 60' dienen kann.

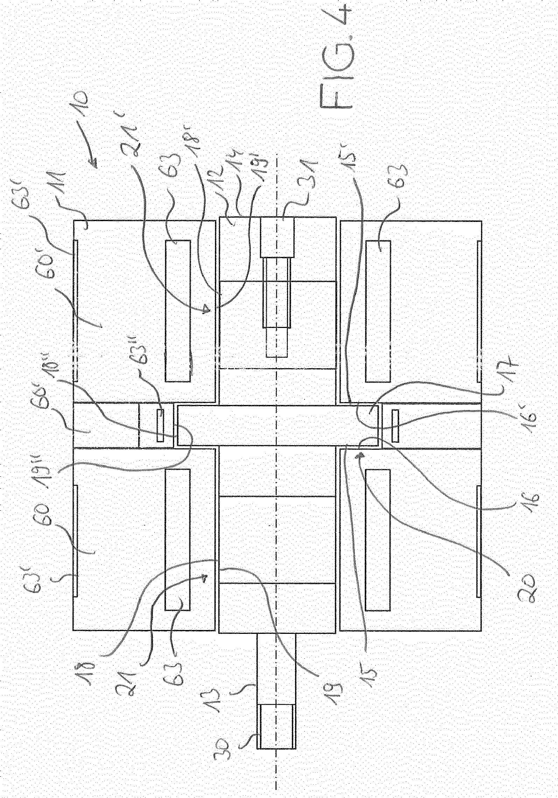

In der vierten Ausführungsform gemäss Figur 4 sind die Lagergehäuseteile 60, 60', 60" miteinander verschweisst, verlötet oder verklebt. Diese Verbindung ist besonders für eine Serienproduktion geeignet. Ein Verschweissen erfolgt bevorzugt mittels eines Laserstrahls oder eines Elektronenstrahls, wodurch der Verzug der Lagergehäuseteile 60, 60', 60" gering gehalten werden kann.

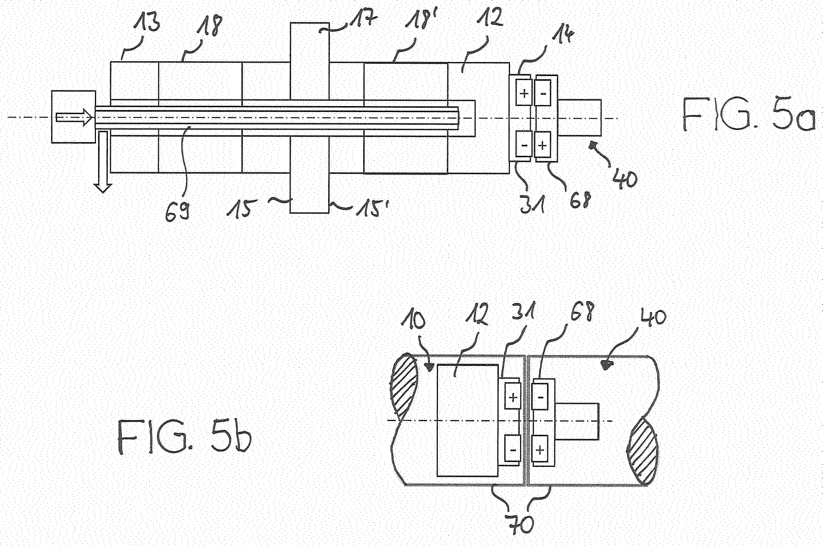

In Figur 5a ist ein fünftes Ausführungsbeispiel gezeigt, bei dem das Lagergehäuse inklusive Gegenlagerflächen und Kühlkanälen zur Vereinfachung nicht dargestellt ist. Das zweite Wellenende 14 hat hier einen kleineren Durchmesser als der gelagerte Teil der Welle 12, also insbesondere als die radialen Lagerflächen 18, 18'. Dies vereinfacht die Montage und Fertigung, da das zweite Wellenende 14 durch den Innendurchmesser des Radiallagers eingeführt werden kann, ohne dass eine Montage/Demontage des Axiallagers nötig ist. Zudem ist die Welle 12 aufgrund des Wellenendes 14 mit kleinerem Durchmesser einfacher auszuwuchten. Am zweiten Wellenende 14 ist ein Magnetkupplungselement 31 gebildet, welches hier die Wellenverbindungsmittel bildet. Durch Zusammenwirken mit einem korrespondierenden Magnetkupplungselement 68 eines Antriebsgliedes 40 wird eine axiale Magnetkupplung erreicht.

Die fünfte Ausführungsform gemäss Figur 5a enthält auch eine Lanze 69, die in axialer Richtung in die Welle 12 eingesetzt ist und mit deren Hilfe ein flüssiges oder gasförmiges Medium, vorzugsweise Wasser, eine Emulsion oder ein Öl, zur Kühlung in die Welle 12 eingeleitet werden kann. Auf diese Weise kann die thermische Ausdehnung der Welle reduziert werden, wodurch die Dimensionen der Gaslagerspalte geringeren Schwankungen unterlegen sind und daher genauere Toleranzen möglich sind.

Die Figur 5b zeigt eine Variante der Magnetkupplung aus Figur 5a. In Figur 5b ist beispielsweise ein zweiteiliges Spaltrohr 70 vorgesehen, welches die beiden Magnetkupplungselemente 31, 68 jeweils einschliesst. Dies ermöglicht eine hermetische Abdichtung, die besonders vorteilhaft ist, wenn in der Gaslagerkartusche 10, dem Antriebsglied 40 und der Umgebung verschiedene Gase vorliegen.

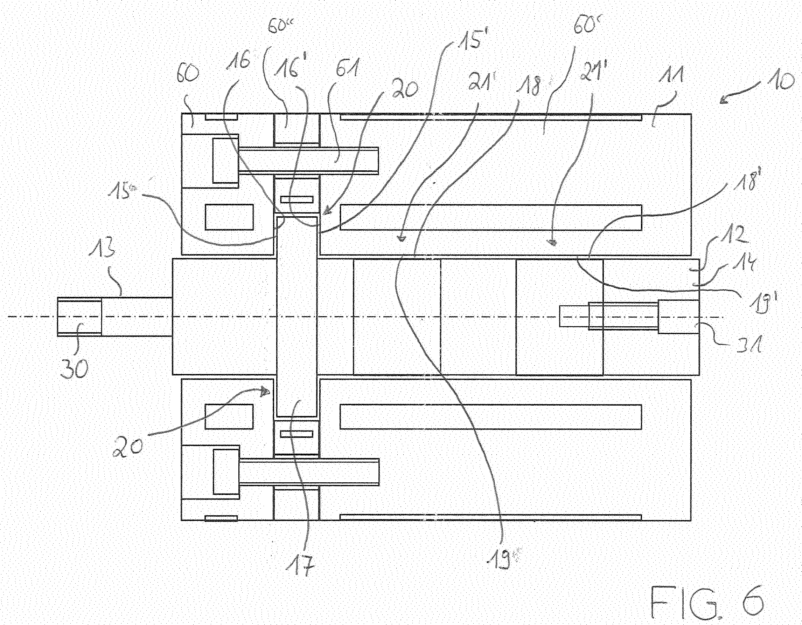

In der Ausführungsform gemäss Figur 6 enthält die Gaslagerkartusche 10 eine einem ersten Wellenende 13 zugewandte erste Radial-Gaslagereinheit 21, eine einem zweiten Wellenende 14 zugewandte zweite Radial-Gaslagereinheit 21' sowie eine zwischen der ersten Radial-Gaslagereinheit 21 und dem ersten Wellenende 13 angeordnete Axial-Lagereinheit 20. Durch diese Anordnung werden eine besonders einfache Montage und teilweise auch Fertigung ermöglicht, da die Welle 12 von einer Seite eingeschoben werden kann; eine präzise Ausrichtung der Radiallagerlagerstellen ist bei der Montage nicht nötig.

Die beiden Radial-Gaslagereinheiten 21, 21' verfügen über jeweilige an der Welle 12 gebildete Lagerflächen 18, 18' sowie am Lagergehäuse 11 gebildete Gegenlagerflächen 19, 19'. Sowohl die Lagerflächen 18, 18' als auch die Gegenlagerflächen 19, 19' sind in diesem Ausführungsbeispiel zylindermantelförmig geformt. Die Axial-Gaslagereinheit 20 enthält eine Lagerscheibe 17 mit einer dem ersten Wellenende 13 zugewandten ersten, in diesem Ausführungsbeispiel ebenen ringförmigen Lagerfläche 15 und einer dem zweiten Wellenende 14 zugewandten zweiten, in diesem Ausführungsbeispiel ebenen ringförmigen Lagerfläche 15'. Diese Ausführung erweist sich vor allem in der Fertigung und Montage als vorteilhaft, da die zwei Radial-Gaslagereinheiten 21, 21' in einer Aufspannung geschliffen werden können. Die Lagergehäuseteile 60 und 60' müssen in der Montage nicht zentriert werden.

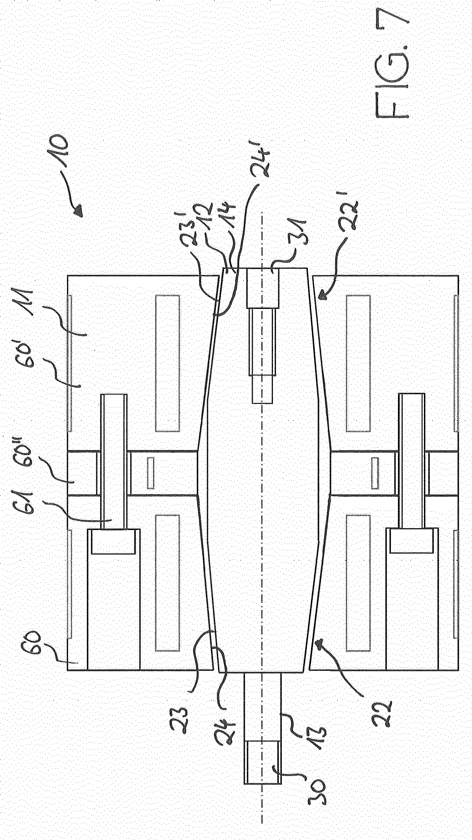

Die in Figur 7 wiedergegebene siebte Ausführungsform enthält zwei kombinierte Axial-Radial-Gaslagereinheiten 22, 22'. Die erste kombinierte Axial-Radial-Gaslagereinheit 22 ist dem ersten Wellenende 13 zugewandt, und die zweite kombinierte Axial-Radial-Gaslagereinheit 22' ist dem zweiten Wellenende 14 zugewandt. Beide kombinierten Axial-Radial-Gaslagereinheiten 22, 22' enthalten eine in diesem Ausführungsbeispiel kegelmantelförmige Lagerfläche 23 bzw. 23'. Dabei verjüngt sich die Lagerfläche 23 in Richtung auf das erste Wellenende 13, und die Lagerfläche 23' verjüngt sich in Richtung auf das zweite Wellenende 14. Das Lagergehäuse 11 enthält entsprechende in diesem Ausführungsbeispiel kegelmantelförmige Gegenlagerflächen 24, 24'. Zwischen der Lagerfläche 23 und der Gegenlagerfläche 24 sowie zwischen der Lagerfläche 23' und der Gegenlagerfläche 24' ist jeweils ein in diesem Ausführungsbeispiel kegelmantelförmiger Spalt gebildet, der für eine kombinierte axiale und radiale Gaslagerung der Welle 12 sorgt. Diese Ausführungsform weist eine sehr kompakte Bauweise mit geringem radialem Bauraum auf. Dies bietet besondere Vorteile, wenn kleine Gehäusedurchmesser erforderlich sind.

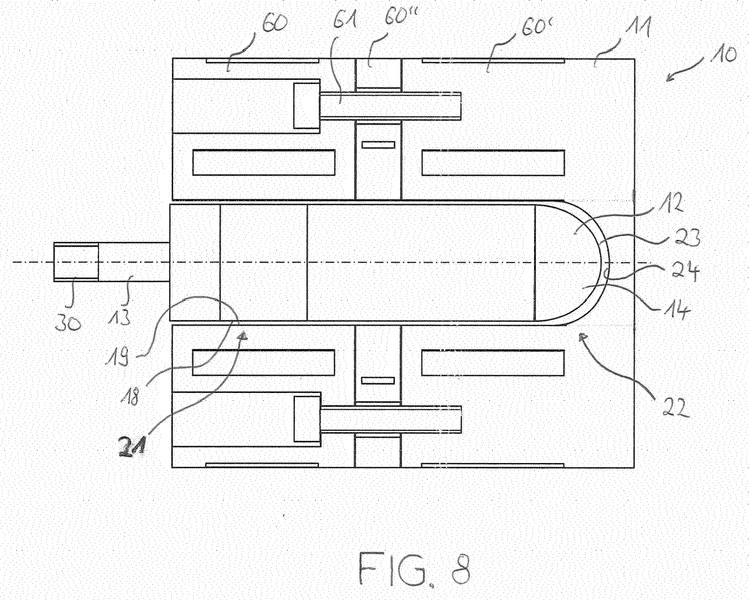

In Figur 8 enthält die Gaslagerkartusche 10 eine kombinierte Axial-Radial-Gaslagereinheit 22. An ihrem zweiten Wellenende 14 enthält die Welle 12 eine in diesem Ausführungsbeispiel kugelkalottenförmige Lagerfläche 23. Auch eine am Lagergehäuse 11 gebildete Gegenlagerfläche 24 ist in diesem Ausführungsbeispiel kugelkalottenförmig, so dass sich zwischen Lagerfläche 23 und Gegenlagerfläche 24 ein in diesem Ausführungsbeispiel kugelkalottenförmiger Spalt bildet. Alternativ können die Lagerfläche 23 und die Gegenlagerfläche 24 auch kegelmantelförmig ausgebildet sein, so dass sich ein kegelmantelförmiger Spalt bildet. Das zweite Wellenende 14 ist hier vollständig innerhalb des Lagergehäuses 11 aufgenommen und enthält keinerlei Wellenverbindungsmittel.

Weiterhin enthält die Gaslagerkartusche 10 gemäss Figur 8 eine Radial-Gaslagereinheit 21, die dem ersten Wellenende 13 zugewandt ist. Anstelle der hier dargestellten drei Lagergehäuseteile 60, 60', 60" kann auch ein einstückiges Lagergehäuse 11 verwendet werden; hierdurch kann auf die Schraube 61 verzichtet werden.

Die in den Figuren 7 und 8 dargestellten Anordnungen haben den Vorteil, dass keine separate Axiallagerung notwendig ist. Zudem können in der Ausführungsform gemäss Figur 8 hohe Axialsteifigkeiten bei geringem radialem Bauraum erreicht werden, da das Gas nicht nach innen ins Zentrum der Welle 12 entweichen kann. Ferner können auch sehr grosse einseitige Axialkräfte aufgenommen werden. Auch in axialer Richtung ist die Bauweise sehr kompakt, da keine Axiallagerscheiben notwendig sind.

Die in den Figuren dargestellten Gaslagerkartuschen 10 können zum Lagern eine Rotationsverbindung zwischen einem ersten Antriebs- oder Abtriebsglied und einem zweiten Antriebs- oder Abtriebsglied eines Rotationssystems verwendet werden. Das Rotationssystem kann beispielsweise eine Werkzeugspindel, eine insbesondere elektrisch angetriebene oder gebremste Strömungsmaschine, wie beispielsweise ein Verdichter, insbesondere ein Turboverdichter, eine Rotationsbremse, ein Turbinengenerator, eine Drehmomentmessanordnung, ein optisches System oder eine Turbine sein.

Zur erfindungsgemässen Verwendung der Gaslagerkartusche 10 wird diese mittels der Gehäuseverbindungsmittel mit einem Systemgehäuse des Rotationssystems verbunden. Weiterhin wird das erste Wellenende 13 mit dem ersten Antriebs- oder Abtriebsglied verbunden, was insbesondere mittels der Wellenverbindungsmittel 30 des ersten Wellenendes 13 geschehen kann. Zudem wird das zweite Wellenende 14 mit dem zweiten Antriebs- oder Abtriebsglied verbunden, was insbesondere mittels der Wellenverbindungsmittel 31 des zweiten Wellenendes 14 erfolgen kann. In einigen Fällen kann dann noch eine Auswuchtung erforderlich sein. Alle weiteren Funktionen der Gaslagerung müssen vom Benutzer jedoch nicht gesondert beachtet werden: Die Lagerpräzision ist durch die Gaslagerkartusche in sich gegeben. Die Kühlung ist bevorzugt direkt integriert, und äussere Einflüsse vom Gesamtsystem auf die Lagerung sind weniger oder gar nicht mehr relevant. Das System ist komplett funktionsfähig und funktionsprüfbar. Die Montage ist sehr einfach und kann ohne Abstimmarbeiten erfolgen, was die Effizienz steigert und für eine Serienproduktion sehr vorteilhaft ist.

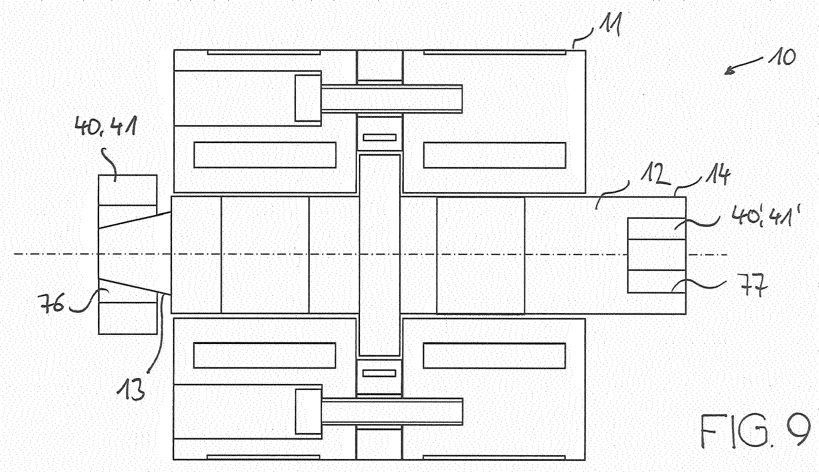

Figur 9 zeigt eine neunte erfindungsgemässe Gaslagerkartusche 10 mit einer Welle 12, bei der sowohl mit einem ersten Wellenende 13 als auch mit einem zweiten Wellenende 14 ein Antriebsglied 40 bzw. 40' oder ein Abtriebsglied 41 bzw. 41' verbunden ist. Das erste Wellenende 13 ist kegelmantelförmig ausgebildet. Das Antriebsglied 40 oder das Abtriebsglied 41 ist in diesem Ausführungsbeispiel mittels einer aufgepressten Spannhülse 76 auf das erste Wellenende 13 gespannt. Die Spannhülse 76 bildet Wellenverbindungsmittel in Form einer Spannverbindung. Beispielsweise kann als Antriebsglied 40 ein Magnet als Rotor eines Motors oder als Abtriebsglied 41 ein Magnet als Rotor eines Generators vorhanden sein. Das zweite Wellenende 14 verfügt über eine Innenbohrung 77, in die als Antriebsglied 40' ein Magnet als Rotor eines Motors oder als Abtriebsglied 41' ein Magnet als Rotor eines Generators eingesetzt sein kann. Drehmomente können in diesem Ausführungsbeispiel durch Magnetkräfte übertragen werden. Natürlich kann das Antriebsglied 40 oder das Abtriebsglied 41 auch auf andere Weise als durch die Spannhülse 76 mit dem ersten Wellenende 13 verbunden sein.

## Patentansprüche

1. Gaslagerkartusche (10), enthaltend ein Lagergehäuse (11) sowie eine Welle (12) mit einem ersten Wellenende (13) und einem zweiten Wellenende (14), wobei
- die Welle (12) mittels mindestens einer Gaslagereinheit (20, 21, 21', 22, 22') innerhalb des Lagergehäuses (11) drehbar gelagert ist, insbesondere mittels mindestens einer Axial-Gaslagereinheit (20) und/oder mindestens einer Radial-Gaslagereinheit (21, 21') und/oder mindestens einer kombinierten Axial-Radial-Gaslagereinheit (22, 22'),
- das erste Wellenende (13) und/oder das zweite Wellenende (14) Wellenverbindungsmittel (30, 31, 76) zum Verbinden der Welle (12) mit mindestens einem rotierbaren Antriebsglied (40; 40') und/oder mindestens einem rotierbaren Abtriebsglied (41; 41') aufweist und
- das Lagergehäuse (11) Gehäuseverbindungsmittel (50; 50') zum Verbinden mit einem Systemgehäuse (52) eines Rotationssystems (51) aufweist.

2. Gaslagerkartusche (10) gemäss Anspruch 1,
**dadurch gekennzeichnet, dass**
die Wellenverbindungsmittel (30, 31, 76) eine Gewindeverbindung (30, 31), eine Klemmverbindung, eine Rändelverbindung, eine Polygonverbindung, eine Schweissverbindung, eine Lötverbindung, eine Kristallisationsverbindung, eine Schrumpfverbindung, eine Pressverbindung, eine Klebeverbindung, eine durch hydraulisches Aufpressen erreichte Verbindung, eine Kunststoffgussverbindung oder eine Lasersinterverbindung enthalten.

3. Gaslagerkartusche (10) gemäss einem der vorangehenden Ansprüche,
**dadurch gekennzeichnet, dass**
ein rotierbares Antriebsglied (40; 40') oder ein rotierbares Abtriebsglied (41; 41') mit dem ersten Wellenende (13) oder dem zweiten Wellenende (14) verbunden ist.

4. Gaslagerkartusche (10) gemäss einem der vorangehenden Ansprüche,
**dadurch gekennzeichnet, dass**
mindestens eine Axial-Gaslagereinheit (20) mindestens eine an der Welle (12) gebildete Lagerfläche (15, 15') sowie mindestens eine am Lagergehäuse (11) gebildete Gegenlagerfläche (16, 16') enthält, wobei zwischen der Lagerfläche (15, 15') und der Gegenlagerfläche (16, 16') ein Axialspalt zur axialen Gaslagerung der Welle (12) gebildet ist.

5. Gaslagerkartusche (10) gemäss Anspruch 4,
**dadurch gekennzeichnet, dass**
die Welle (12) eine Lagerscheibe (17) mit einer dem ersten Wellenende (13) zugewandten ersten Lagerfläche (15) der Axial-Gaslagereinheit (20) und einer dem zweiten Wellenende (14) zugewandten zweiten Lagerfläche (15') der Axial-Gaslagereinheit (20) aufweist.

6. Gaslagerkartusche (10) gemäss einem der vorangehenden Ansprüche,
**dadurch gekennzeichnet, dass**
mindestens eine Radial-Gaslagereinheit (21, 21') mindestens eine an der Welle (12) gebildete Lagerfläche (18, 18') sowie mindestens eine am Lagergehäuse (11) gebildete Gegenlagerfläche (19, 19') enthält, wobei zwischen der Lagerfläche (18, 18') und der Gegenlagerfläche (19, 19') ein Radialspalt zur radialen Gaslagerung der Welle (12) gebildet ist.

7. Gaslagerkartusche (10) gemäss einem der vorangehenden Ansprüche,
**dadurch gekennzeichnet, dass**
die Gaslagerkartusche (10) eine dem ersten Wellenende (13) zugewandte erste Radial-Gaslagereinheit (21), eine dem zweiten Wellenende (14) zugewandte zweite Radial-Gaslagereinheit (21') sowie eine zwischen der ersten Radial-Gaslagereinheit (21) und der zweiten Radial-Gaslagereinheit (21') angeordnete Axial-Gaslagereinheit (20) enthält.

8. Gaslagerkartusche (10) gemäss einem der vorangehenden Ansprüche,
**dadurch gekennzeichnet, dass**
die Gaslagerkartusche (10) eine dem ersten Wellenende (13) zugewandte erste Radial-Gaslagereinheit (21), eine dem zweiten Wellenende (14) zugewandte zweite Radial-Gaslagereinheit (21') sowie eine zwischen der ersten Radial-Gaslagereinheit (21) und dem ersten Wellenende (13) oder zwischen der zweiten Radial-Gaslagereinheit (21') und dem zweiten Wellenende (14) angeordnete Axial-Gaslagereinheit (20) enthält.

9. Gaslagerkartusche (10) gemäss einem der vorangehenden Ansprüche,
**dadurch gekennzeichnet, dass**
mindestens eine kombinierte Axial-Radial-Gaslagereinheit (22, 22') mindestens eine an der Welle (12) gebildete nicht-zylindrische und nicht-ebene rotationssymmetrische Lagerfläche (23, 23') sowie mindestens eine am Lagergehäuse (11) gebildete nicht-zylindrische und nicht-ebene rotationssymmetrische Gegenlagerfläche (24, 24') enthält, wobei zwischen der Lagerfläche (23, 23') und der Gegenlagerfläche (24, 24') ein rotationssymmetrischer Spalt zur kombinierten axialen und radialen Gaslagerung der Welle (12) gebildet ist.

10. Gaslagerkartusche (10) gemäss Anspruch 9,
**dadurch gekennzeichnet, dass**
die Gaslagerkartusche (10) eine dem ersten Wellenende (13) zugewandte erste kombinierte Axial-Radial-Gaslagereinheit (22) mit einer an der Welle (12) gebildeten, sich in Richtung auf das erste Wellenende (13) verjüngenden ersten rotationssymmetrischen Lagerfläche (23) sowie eine dem zweiten Wellenende (14) zugewandte zweite kombinierte Axial-Radial-Gaslagereinheit (22') mit einer an der Welle (12) gebildeten, sich in Richtung auf das zweite Wellenende (14) verjüngenden zweiten rotationssymmetrischen Lagerfläche (23') enthält.

11. Gaslagerkartusche (10) gemäss einem der Ansprüche 9 und 10,
**dadurch gekennzeichnet, dass**
die nicht-zylindrische rotationssymmetrische Lagerfläche (23, 23') und die nicht-zylindrische rotationssymmetrische Gegenlagerfläche (24, 24') kegelmantelförmig oder kugelkalottenförmig sind.

12. Verwendung einer Gaslagerkartusche (10) gemäss einem der vorangehenden Ansprüche zum Lagern einer Rotationsverbindung zwischen einem ersten Antriebs- oder Abtriebsglied (40; 40') und einem zweiten Antriebs- oder Abtriebsglied (41; 41') eines Rotationssystems (51), wobei
- die Gaslagerkartusche (10) mittels der Gehäuseverbindungsmittel (50; 50') mit einem Systemgehäuse (52) des Rotationssystems (51) verbunden ist,
- das erste Wellenende (13) mit dem ersten Antriebs- oder Abtriebsglied (40; 40') verbunden ist, insbesondere mittels der Wellenverbindungsmittel (30) des ersten Wellenendes (13),
- das zweite Wellenende (13) mit dem zweiten Antriebs- oder Abtriebsglied (41; 41') verbunden ist, insbesondere mittels der Wellenverbindungsmittel (31) des zweiten Wellenendes (14).

13. Verwendung gemäss Anspruch 12,
**dadurch gekennzeichnet, dass**
das Rotationssystem (51) eine Werkzeugspindel, eine insbesondere elektrisch angetriebene oder gebremste Strömungsmaschine (10), wie beispielsweise ein Verdichter, insbesondere ein Turboverdichter, eine Rotationsbremse, ein Turbinengenerator, eine Drehmomentmessanordnung, ein optisches System oder eine Turbine ist.
